# EUROPEAN PATENT APPLICATION

(11) **EP 1 187 010 A2**
(43) Date of publication of application: **13.03.2002**
(21) Application number: 01810004.0
(22) Date of filing: 04.01.2001
(51) Int. Cl.: G06F 9/44

(54) **Method and system for implementing process-based web applications**

(30) Priority: 12.07.2000 EP 00810610
(71) Applicant: IvyTeam AG, 6304 Zug (CH)
(72) Inventor: Lienhard, Heinz, Dr., 6300 Zug (CH); Bütler, Bruno, 5643 Sins (CH); Poli, Marco, 6343 Rotkreuz (CH); Weiss, Reto, 6403 Küssnacht (CH); Künzi, Urs-Martin, 8049 Zürich (CH); Pentus, Mati, 117192 Moscow (RU)
(74) Representative: Barth, Carl Otto, Dipl.-Ing.

(57) **Abstract**

This invention relates to the structure and design of a method and a system for designing and implementing Web and similar applications in an automated, computerized way, in particular without any computer programming. In principle, this is achieved by literally drawing a process model expressing what the desired Web application should do, then preferably simulating and/or testing the desired application, and finally automatically enabling the application by using the process model as the controlling engine of the designed application. The latter is done by uploading the designed process model to a server or computer network thus implementing it as run-time application. No other workflow system or similar additional software nor any special hardware is required.

The invention provides such process-based Web applications by building on an already existing process modeling and optimization tool, which is now extended to not only create a process model of the application, but also to turn this process model into the controlling part of the application and thus becoming the run-time application itself. It can be readily adapted to given requirements without requiring any programming knowledge, since the behavior of the application is given by the, preferably graphical, process model and all communications between users and application may be defined by integrated assistants or wizards and/or using common HTML or XML tools.

## Description

### Introduction and Prior Art

The present invention relates to a novel system for implementing Web applications or, more general, to the structure and design of Web applications or solutions, i.e. Internet or Intranet solutions. Present day Web applications of this kind are often ad hoc developed, therefore hard to adapt to the fast moving requirements of the market and thus expensive in the long run. Also, it is becoming difficult to find persons skilled in the art able to develop, test, and implement such applications. The present invention provides a systematic, computerized approach for solving this problem by using, in brief, a graphical model for describing and simulating the process of the desired application and an automated, computer-controlled way for enabling or implementing the modeled solution.

The program logic or process behind today's e-commerce and business-to-business solutions and most other Web solutions are usually so-to speak "hard-coded" in software - thus in a sense "hard-wired". This makes them inflexible and difficult to change and requires special knowledge to make even minor changes. Also, the business processes often have not been adapted to fit the new way of doing business. In many cases, Web applications are not properly integrated into the overall respective business processes.

For a number of years, processes of various kinds, e.g. business processes, or processes in government administration, are being recorded and documented; increasingly also process modeling and simulation is done to optimize such processes. European patent application 1 061 422, equivalent to US patent application serial no. 09/590 744, which is hereby incorporated by reference, describes an example. But more and more the automation of processes, or at least their efficient support by information technology (IT), is becoming the center of attention. Therefore, newer business solutions are workflow-based where the workflow actually is the automation of the underlying process. Also, communicating process innovations to the people involved will be ever more important. With Web applications becoming relevant for the business as well as for the public service sector, most present approaches are inadequate and their cost will soon become unacceptable.

What appears to be needed are process-based Web applications and solutions whose behavior is largely defined by processes as mentioned above: by business processes, by technical processes, and/or by administrative processes.

Most of today's IT systems or applications actually have a behavior given by an underlying process, but this process is often implicit in the solution and can neither be readily understood nor easily modified. By making the process explicit in the solution, it becomes much easier to specify, implement, and adapt such systems to changing needs.

### The Invention

Generally speaking, the present invention is a generic approach to making a process underlying a given application explicit so that it becomes easy to design and implement Web applications in an elegant and flexible way. In principle, this is achieved by drawing a process model expressing clearly and easily what the desired application has to do, then possibly (and preferably) simulating and/or animating the desired application, and finally automatically generating the application by using the process module (which comprises a process model and a simulator) as the controlling engine of the application. No other workflow system or similar additional software nor any special hardware is required.

The invention provides such a process-based generic Web application, which is - simply speaking - built on an already existing, advanced and easy to use process modeling and optimization tool as described in the above-cited European patent application 1 061 422 (or US patent application serial no. 09/590 744). But in the present invention, the modeled processes serve an additional purpose as compared to this prior art: they become the controlling part of the application by linking the model simulator to a Web server via a servlet, and thus the run-time application itself is obtained.

A servlet is intended to extend a Web server's functionality and one may think of it as a server side applet. In much the same way as an applet extends the functionality of a browser, a servlet extends the server's functionality.

The present invention is, so-to-speak, a "WYSIWYG Generic Application System" or a process-based Web application platform. It can be readily adapted to given requirements without the need for any programming knowledge, since the application's program logic is defined with the process model that can be set up in an intuitive way. A powerful palette of modeling elements may be used together with built-in dialog and database assistants. Interaction between the user and the application occurs via a common Internet browser. These interaction dialogs, or rather dialog pages, may be graphically enhanced with known HTML or XML tools; but the part of the page (or section of it) which is relevant to the logic and behavior of the application is automatically generated from the built-in assistant and requires no recourse to HTML or any similar language.

In other words, the invention is a generic Web (Internet or Intranet) solution whose dynamic behavior is defined by a process module. This process module is the core of the whole application: the complete process can be simulated and animated in said process module before it is automatically converted into the run-time application. The simulator within the process module becomes the workflow engine in the run-time system which is coupled via a servlet to a Web server or similar computing engine, thereby controlling the interactions with any client, e.g. an Internet or Intranet user or the access to a data base or other external module, according to the modeled process. The users interact with the novel system through any of the usual Internet browsers.

Also, the system administrator(s) or manager(s) may interact with the system in much the same way, e.g. for content management, process adaptations etc., whereby the respective management or administration processes are set up (and modified) in the same way as the actual application processes, although access rights to do so may be different. Hence, not only the dynamics of the application are defined by processes, but also the management and the maintenance of the application including its content may be defined by processes. Therefore, these applications will usually comprise a whole set of processes combined in a "process map or landscape". Each such process may be started by a corresponding "Start Request" or a "Trigger" from another process (see below).

The process module, i.e. the process model contained in the module, can access external databases and/or application modules, e.g. an e-mail system, transaction monitor etc. So-called standard elements as described in the above cited European patent application 1 061 422 (US patent application serial no. 09/590 744) provide an easy and intuitive way for any user for building and/or modifying the process model, without any programming knowledge or input.

Further, the dialogs between a system according to the invention and a user are most easily arranged by an assistant or wizard integrated into the system. Such an assistant may be directly called from the dialog standard elements (see below). The position of the dialog element within the process model determines the point in time at which the dialog appears within the user's browser; the information displayed to or required from the user is determined by the dialog form set up with the assistant. The dialog pages may be graphically arranged and elaborated, e.g. with an HTML tool, as mentioned above. Those areas in a dialog page that are crucial to the information exchange are automatically marked to protect them from accidental manipulation.

Another assistant or wizard associated with the database step (see below) makes the definition of database accesses within the process very easy and intuitive, again without needing any programming; a database query may thus be set-up by just three clicks and a simple search criterion.

For designing and prototyping the solution according to the invention, process module, database(s), browser for the interaction, etc. are preferably installed on a single computer, PC or workstation. However, other, e.g. "distributed" solutions, are as well possible.

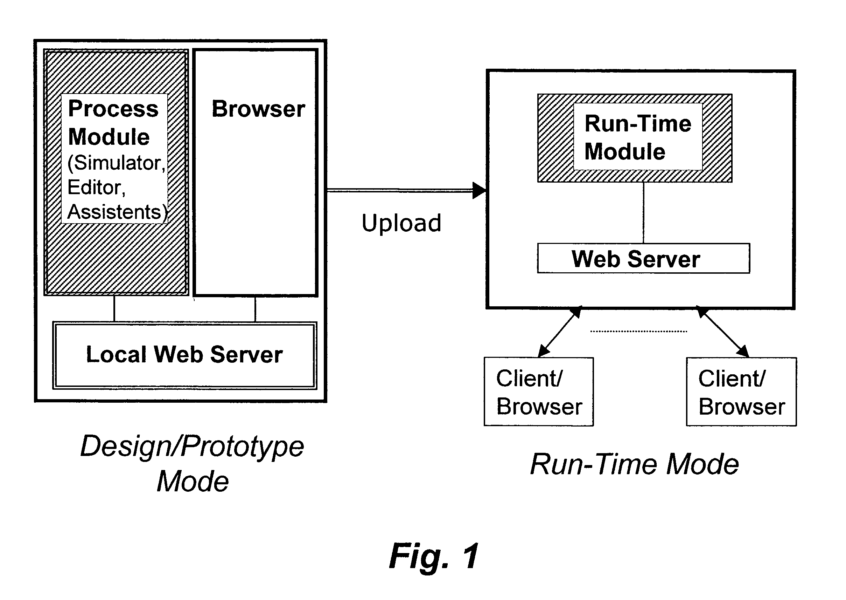

Essentially, as shown in Fig. 1, the system works stepwise in two modes or phases. The first mode is a design or prototyping mode using the so-called design kit (which is one part of the invention), in which the controlling process model and the necessary dialogs, database-accesses, etc., are designed. When this is done, the system is tested and can be demonstrated. Since the used process module allows an animation of the designed process model, the working of the model and the actions of the application, particularly the interactions with the user, the database accesses and accesses to other software modules can be permanently observed, thus providing a complete and transparent picture to the prospective user(s) and operator(s) of the system, possibly providing new insights regarding the application. Since the system can easily be changed in this prototyping and testing mode, the resulting solutions are extremely adaptive and flexible.

In this first mode, the use of a "local server" together with the process module appears advantageous, i.e. the entire design kit and any required data base, etc., are preferably installed on the same PC or workstation, since this appears to be the most flexible arrangement for designing and prototyping, as mentioned above. A different arrangement may be chosen, when the invention is used in an Application Service Provider (ASP) context.

The second mode is the enabling or run-time mode. On the "real server", i.e. the server that will host the run-time application and which is connected to the Internet or Intranet, the so called run-time kit is installed. This run-time kit comprises the run-time process module and the above-mentioned servlet that couples it to a standard Web server software like Apache or IIS (from Microsoft). Now, the tested process-based application prototype is turned into the run-time Web application. Essentially, this is done by uploading automatically, i.e. simply by selecting the appropriate menu item within the process module of the design kit, all the application-relevant data that by now have been tested, including process model, templates, database data and possibly data connected with external application modules (e.g. a transaction monitor) onto the "real" server hosting the run-time application.

It is also possible to include a process or sub-process (e.g. as an applet) on a dialog page. This way, part of an application process or logic may be executed on a client machine instead of the server. This can lead to significant reduction of the server load, but only when the sub-process delegated to the client does not require frequent database access or other access to central services. Processes or sub-processes that are executed on the client could also be made visible to the user as convenient navigation help; i.e. the user can see where he/she is within the application.

In the extreme case, the clients install or download the run-time kit according to the invention and the data of a particular application, i.e. the complete process model, preferably as XML document(s). This application is then run as a so-called "peer-to-peer" instead of a client-server application.

Vice versa, a download of the data by selecting an appropriate menu item within the design kit, which data previously have been uploaded and possibly changed during operation, onto the machine on which the design kit has been installed, brings us back into the designing/prototyping mode of the corresponding application, to e.g. add, modify, and/or test further steps within said application. After a satisfying test, the application data is again uploaded to the real server and turns into a (now modified) run-time version.

Another way to make certain adjustments to the application, directly on the running application, is by using a common Internet browser and proper, and possibly secure, login into the real server.

If desired, performance and other data may also be downloaded, e.g. data allowing pricing of the application when run in a ASP context (see above). Alternatively, this may be done by secured login via a browser. As mentioned above, Fig. 1 tries to depict this relation.

Hence, with the invention, Web applications are obtained in an almost playful graphical way:
- in the design/prototyping mode, a process model is drawn that expresses what the application should do; or, simpler yet, a given reference model that comes close to the desired application is chosen and adapted to the actual needs;
- a dialog assistant or wizard is used within the dialog steps to define the information to be exchanged in the particular client interaction;
- the data required in various process elements are entered via the masks associated with these elements, e.g. database path, selection criteria, attribute values to be used, etc.;
- the prototype is animated and tested;
- with an upload command, the data resulting from the design/prototyping phase are automatically uploaded to the actual server (one's own or an application service provider's server) .

The program logic of the solution is thus defined and implemented with a graphical process model. As already mentioned, these models are built using standard elements (or components containing such elements) as described in EP application 1 061 422 (US patent application serial no. 09/590 744). In addition to the control elements and workflow steps used for usual process simulation and optimization, new process elements are needed in the present invention to interact with the real world, e.g. for client-system interaction (dialog steps), database access, or access to existing transaction modules etc. Hence, a special augmented element palette is made available in the system according to the invention for the efficient design of application processes and there automatic conversion to the run-time solution.

### Description of an Embodiment of the Invention

In the following, an example how to implement the present invention will be shown and described. The figures illustrate this implementation:
Fig. 1 mentioned above, illustrate the two parts/modes of the invention;
Fig. 2 shows a general layout of the architecture of the run-time implementation;
Fig. 3 is a more detailed view of the run-time module of Fig. 2; and
Fig. 4 illustrates the interaction between a user and the Web application.

As addressed already above, Fig. 1 shows the two modes or parts of the invention:
- the design/prototype mode in which the application is modeled and animated using a "design kit" which includes the process module of the invention and a local Web server;
- the run-time mode where the actual Web application runs on the "real" server machine hosting the application with the installed run-time kit, i.e. the run-time module according to the invention.

In the design/protype mode, by starting the simulator in the process module, the browser is opened via the local Web server displaying a first template from which one of the modeled processes may be started. Now, an application prototype can be animated step by step. Using a process editor and the assistants (as explained above), the prototype can be modified or extended at any point and animated again until a satisfactory result is obtained. Then, by selecting the appropriate menu item, the application relevant data, e.g. process model data, templates, data base information etc. are uploaded automatically over the Internet (or Intranet) onto the "real" Web server, thus enabling the run-time mode. Now any client on the Internet (or Intranet) may interact with the application via his/her browser.

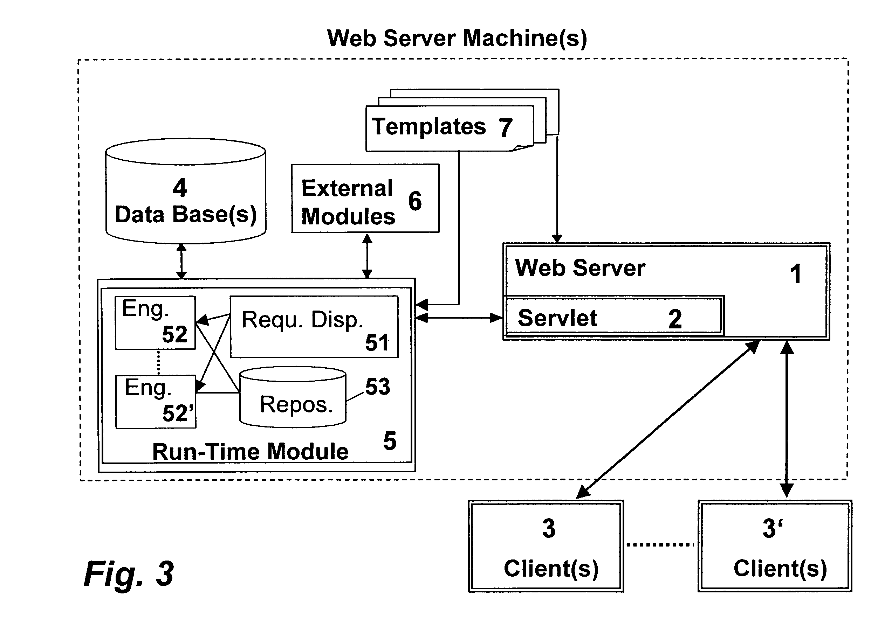

Whereas for design and prototyping, the design kit (process module, local Web server) and the Web browser are preferably installed on the same computer, in the run-time mode, copies of the run-time module may reside on several machines, e.g. for load sharing purposes. This is further down discussed in connection with Fig. 3.

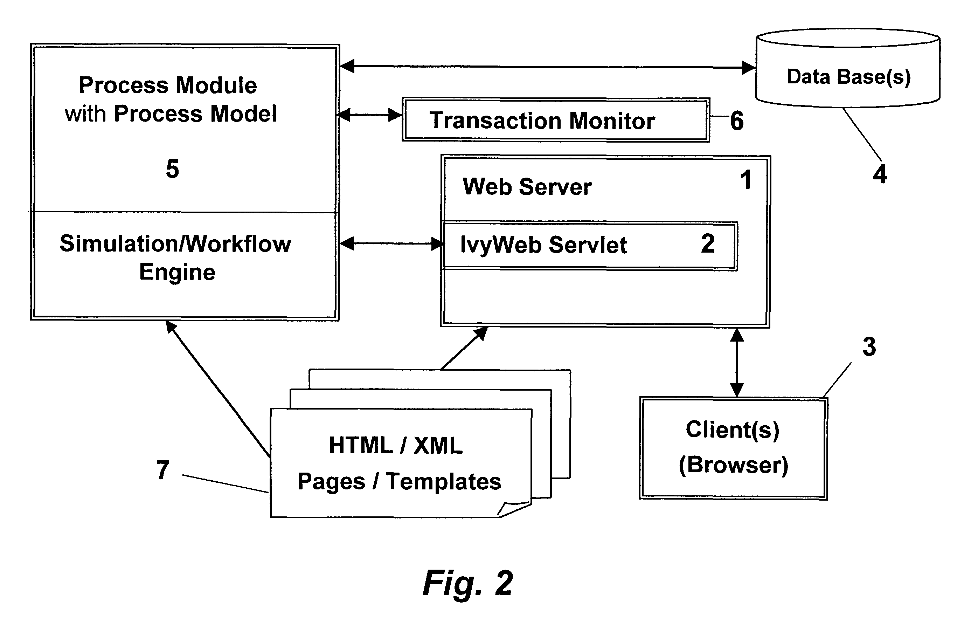

Fig. 2 shows the general architecture of an application in the run-time mode according to the invention. It ties together a Web server 1, which e.g. may be an Apache or Microsoft IIS server with a servlet 2, a browser on an arbitrary client machine 3 (connected to the Internet or Intranet) for the interaction dialogs, one or more databases 4 and possibly other external modules like a transaction monitor 6, the run-time process module 5, and the necessary templates 7 for the dialogs with the user. These templates 7 may be HTML or XML pages, etc. that have been created with the dialog assistant with the design kit (see above). The simulation engine of the process module now becomes the workflow engine controlling the behavior of the application in the run-time module 5. This module is connected to the Web server 1 via a servlet 2, which forms a kind of extension to the Web server. The Web server 1 is also connected to the Internet or an Intranet and thus to the client machine(s) 3 of potential users.

The data base(s) 4 and/or other external modules like transaction monitor 6 can be accessed through special process elements, further described in the following.

As in principle described in EP application 1 061 422 (US patent application serial no. 09/590 744), the special process elements needed here are made from a few fundamental base elements (at present three base elements), so-called quarks. This means that additional or special elements can be created efficiently whenever new types of applications should require them.

The system according to the invention preferably has an element palette featuring at least the following types of standard elements:

### Control elements

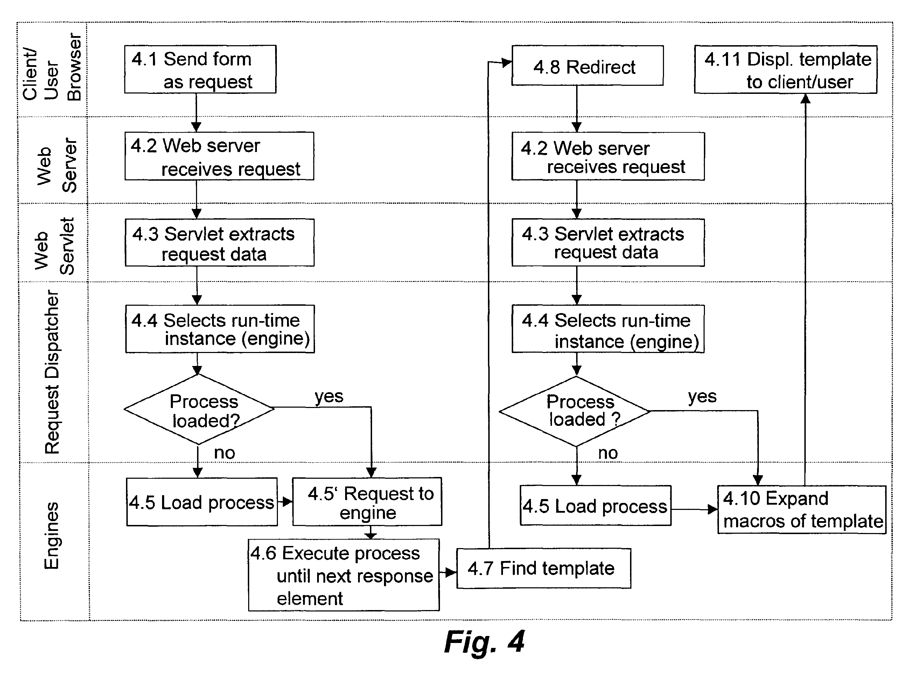

These elements are used to define the data flow control in a process and are similar or identical to those described in European patent application 1 061 422 (US serial no. 09/590 744).
- a "Start Request" element which serves to receive requests from the clients via the Web server. It is similar to the "Start Element" of Fig. 4 in the above cited European patent application, but where the latter represents a free running event generator, the "Start Request" element reacts now to the Web server (1 in Fig. 2), starting the execution of the particular controlling application process corresponding to the request;
- a "Role Assignment" element is established for the control of the access rights of a user or client;
- control elements like "Alternative", "Split" etc., that behave exactly like the elements with the same name of the above-mentioned patent application.

### Transaction elements

These elements serve to execute transactions like data base accesses or to execute transformation of data carried by the data objects flowing through the process:
- a "Transformation Step" element which is used to carry out computations on the data flowing through the process. It is practically identical to the "Step" Element explained in the above-cited EP application 1 061 422 (US patent application serial no. 09/590 744);
- a "Database Step" element allowing simple access to databases. This step element connects the user directly with the database enabling him/her to read data from or write data into the data base selected.

### Dialog elements

These elements are used to establish a dialog with a user at a particular point in the process (see also Fig. 4):
- a "Dialog" element allowing to communicate with the user or client. Whenever the latter element is activated in the process, a corresponding dialog page is presented to the user for the exchange of information between him/her and the application;
- a "DB-Dialog" that opens a view to a given data base to scan whole lists of items (e.g. products in an e-commerce application). The user may then select a particular item, either to buy it, or to obtain further information on it.

### Communication elements

These elements serve to establish communication over various channels, e.g.:
- an "e-mail Step" to automatically launch an e-mail over the Internet or Intranet, e.g. to confirm an e-commerce order;
- an "SMS Step" to generate short messages for the mobile user;
- a "Trigger Step" to start any required back-end or supply chain process, i.e. a work-flow process, over the Intranet or Internet. Such a process may be implemented using a system according to the invention, thus allowing to create complete business-to-business, e-commerce or e-government solutions in a consistent and transparent way.

### Other special elements

With *special process elements,* the system will also be able to access automatically other Web sites or applications respectively, using the Web as information pool and resource provider for any data or resources needed by an application.

*Special interface elements* can also be set up to couple the applications created by the invention with already existing solutions. Examples are so-called Enterprise Resource Planning (ERP) systems, Document Management systems (DMS) or Customer Relationship Management (CRM) solutions which are thus substantially extending their scope and functionality.

Such interface elements, as well as other new standard elements for process modeling and implementation, can be easily defined with an assistant or wizard based on the quark concept described in the above cited EP application 1 061 422 (US patent application serial no. 09/590 744).

Parameters and/or other data required by any of the above elements can be entered via associated masks. Examples for such parameters are the database path for the *Database Step,* selection criteria to access selected data from the data base, attribute values to be used from the object flowing into the element, etc.

Fig. 3 provides a more detailed view of the run-time module 5 shown in Fig. 2. Module 5 contains a request dispatcher 51 (see also Fig. 4) which selects an instance of the run-time module (or engine 52) that is available if there is more than one, checks whether it already contains the necessary process data and, if they are missing, loads them from the repository 53.

Fig. 4 shows what happens technically when a user is interacting with an application that has been designed using the invention:
4.1 The browser of a client 3 in Fig. 3 sends a form (part of a dialog page) to the Web server 1 in Fig. 3 hosting the application via HTTP (Hypertext Transfer Protocol);
4.2 the Web server receiving the HTTP request forwards it to the servlet 2 in Fig. 3 of the Web server;
4.3 the servlet extracts the necessary information from the request and passes it on to the request dispatcher 51 (Fig. 3);
4.4 the request dispatcher selects one of the run-time instances or engines 52 in Fig. 3, which are preferably installed on different server machines, to balance the load of the various engines, i.e. machines;
4.5 in case the selected run-time does not yet contain the required process data, they are now loaded into the run-time instance from the repository 53 in Fig. 3;
(4.5') a data object with the corresponding request data is injected into the beginning of the process;
4.6 the simulator (engine) in the process module starts execution of the process corresponding to the request;
4.7 the process execution proceeds until the next process element has to give a response. The template corresponding to the response is selected; and
4.8 by a corresponding HTTP response, the user's browser is redirected to the appropriate address of the Web server to get the template for the next interaction between the user and the application.
4.9 Steps 4.2 to 4.5 are now repeated.
4.10 The template page is loaded into the engine where the various HTML information macros are expanded.
4.11 The expanded page is returned as HTTP response and displayed in the browser of the user/client 3 in Fig. 3.
A person skilled in the art can implement the invention as described above without any difficulty, whether in software or in a combined software/hardware embodiment.

To summarize, the system according to the invention operates to develop and implement Web applications in the following way:
- In the design mode, the user literally draws a process model, which expresses what the application shall do, or he/she selects a reference model which is sufficiently similar to the desired solution and adapts the latter to the problem to be solved. The user may employ an integrated assistant or wizard to define the information to be entered for a particular client interaction or to specify the data to be read from a particular data base. The data required in the various process elements are entered via the masks associated with these elements, e.g. database paths, selection criteria, attribute values to be used.
- Still in the design mode, the user may animate and test the thus developed prototype. This intermediate step, a so-to-speak "test mode", may be repeated after modifications have been introduced in the previous steps until a satisfactory result is achieved for the process model.
- This design mode is usually executed on a local server, preferably on a stand-alone machine like a laptop.
- In the implementation mode, i.e. to obtain the run-time application, the user uploads the prototyped solution to a real server connected to the Internet or Intranet, whatever is applicable. The process model now turns into the run-time application that controls the implemented solution.

As can be seen from the above, the program logic of the solution is defined and implemented with a graphical process model. As described, this model is constructed using standard elements or components containing such elements. In addition to the control elements and workflow steps used for process simulation and optimization in the process tool described in the above-mentioned EP application 1 061 422 (US patent application serial no. 09/590 744), new process elements are needed. Hence, the special, augmented element palette described above is made available in the solution according to the invention for the efficient development of application processes.

Thus, the invention enables the design of problem solutions with a single coherent approach, solutions which traditionally have been treated separately. Examples are workflow solutions and Web applications, especially interactive Web sites, which may now become a single comprehensive application. A complex Internet or Intranet solution combining a Web front end like an e-commerce shop with workflow applications like back office or supply chain processes becomes now feasible to design and implement in the same way by using the invention.

The so-called content management that may be required for the application, i.e. the means necessary to efficiently update the information on the dialog pages, can also be supported by appropriate content management processes that are designed and implemented in the same way as the application processes.

## Claims

1. A method for modeling and implementing applications, preferably Web applications, using a computerized process model and a computerized interface for implementing said model as a run-time application, wherein
- in a design or prototyping mode, said process model is drawn up according to the desired application by using an extendable set of building blocks and a preferably automated dialog for defining information needed by the process,
- entering the data corresponding to said information needed,
- animating and/or testing the thus designed prototype,
- uploading the final prototype of said application defined by said process model via said interface into a server or a computer network to obtain the run-time implementation of said application, and
- in an implementing mode, executing said run-time application through said server or computer network.

2. The method according to claim 1, wherein the application is defined by more than one process or process model, in particular by processes or process models specifically supporting content management of said application.

3. The method according to claim 1, wherein
in the design mode, the process or process model is graphically displayed and may be modified by graphical means and/or elements.

4. The method according to claim 1, wherein
in the design mode, and before starting the implementing mode, the prototype may be several times modified and/or re-designed until a desired function or functional objective is reached.

5. The method according to claim 1, wherein
in the design mode, the preferably automated dialog is designed as a step-by-step dialog and the displayed process proceeds accordingly whenever data is entered.

6. The method according to claim 5, wherein
during the preferably automated dialog, graphical masks are provided, in particular close to displayed corresponding process elements into which masks the required data are entered.

7. The method according to claim 1, wherein
both in design and the the run-time mode, the interaction with a designer/user of an application is carried out via a common Internet browser.

8. The method according to claim 7, wherein
the dialog pages for the interaction between application and designer are common HTML, XML, or similar pages, preferably containing marked areas to protect against accidental or voluntary manipulation or modification of information critical for proper functioning of the application.

9. The method according to claim 1, wherein
in the run-time mode, a process may be started automatically from another application rather than directly from a user.

10. The method according to claim 1, wherein
a process or sub-process is executed as run-time application in a distributed way on the client machines instead of on the server.

11. The method according to claim 1, wherein
an installed or downloaded run-time application is run as a so-called "peer-to-peer" instead of a client-server application.

12. The method according to claim 1, wherein
a process model is not defining the application itself but rather its management and administration, particularly for so-called content management.

13. An integrated, computerized system for modeling and implementing an application with a process model and an interface for implementing said model, including
- means for displaying said process model,
- means for executing automated dialogs between a designer and said process model, including means for entering data into said process model and means for controlling changes of said process model to develop and/or amend a prototype of the desired process,
- means for animating and/or testing said thus designed prototype,
- means for implementing said process model by uploading the final prototype of said process via said interface into a server or computer network.

14. The computerized system according to claim 13, wherein
the server or computer network is connected to the Internet or an Intranet.

15. The computerized system according to claim 13, wherein
- said means for displaying the process model in the design mode is a graphical means and includes
- means for graphically modifying elements of said process model.
